# EUROPEAN PATENT SPECIFICATION

(11) **EP 3 238 838 B1**
(45) Date of publication and mention of the grant of the patent: **29.11.2023**
(21) Application number: 16202432.7
(22) Date of filing: 06.12.2016
(51) Int. Cl.: B08B 7/02

(54) **ACOUSTIC CLEANING OF GAS TURBINE ENGINE COMPONENTS**
AKUSTISCHE REINIGUNG VON GASTURBINENMOTORKOMPONENTEN
NETTOYAGE ACOUSTIQUE DE COMPOSANTS DE TURBINE À GAZ

(30) Priority: 16.12.2015 US 201514970688
(43) Date of publication of application: 01.11.2017
(73) Proprietor: General Electric Company, Schenectady, NY 12345 (US)
(72) Inventor: FLYNN, Peter Andrew, Niskayuna, NY New York 12309 (US); NAWROTH, Brent, Cincinnati, OH Ohio 45215 (US)
(74) Representative: Openshaw & Co.

(56) References cited:
- EP-A1- 1 410 853
- DE-A1- 4 341 996
- US-A1- 2012 266 586

## Description

The present subject matter relates generally to gas turbine engines, and more particularly, to acoustic cleaning of on-wing gas turbine engines.

A gas turbine engine generally includes, in serial flow order, a compressor section, a combustion section, a turbine section and an exhaust section. In operation, air enters an inlet of the compressor section where one or more axial or centrifugal compressors progressively compress the air until it reaches the combustion section. Fuel is mixed with the compressed air and burned within the combustion section to provide combustion gases. The combustion gases are routed from the combustion section through a hot gas path defined within the turbine section and then exhausted from the turbine section via the exhaust section.

In particular configurations, the turbine section includes, in serial flow order, a high pressure (HP) turbine and a low pressure (LP) turbine. The HP turbine and the LP turbine each include various rotatable turbine components such as turbine rotor blades, rotor disks and retainers, and various stationary turbine components such as stator vanes or nozzles, turbine shrouds, and engine frames. The rotatable and stationary turbine components at least partially define the hot gas path through the turbine section. As the combustion gases flow through the hot gas path, thermal energy is transferred from the combustion gases to the rotatable and stationary turbine components.

During operation, environmental particulate accumulates on engine components. Such accumulation can lead to reduced cooling effectiveness of the components and/or corrosive reaction with the metals and/or coatings of the engine components, as well as fouling and deterioration of aircraft engine components. Thus, particulate or foulant build-up can lead to premature distress and/or reduced engine life. In addition, substantial accumulation can require the engine to be removed from the aircraft wing, which can time-consuming and expensive.

As such, on-wing cleaning of gas turbine engines constitutes a significant value proposition as compared to shop-level cleanings. Accordingly, the present disclosure is directed to acoustic cleaning that addresses the aforementioned issues. More specifically, the present disclosure is directed to systems and methods of acoustic cleaning gas turbine engine components that are particularly useful for on-wing cleaning of such components.

DE 43 41 996 A1 relates to a method and system of preventing formation of deposits on interior of gas turbine engine, in accordance with the preambles of claims 1 and 9, respectively.

Various aspects and advantages of the invention will be set forth in part in the following description, or may be clear from the description, or may be learned through practice of the invention.

In one aspect, the present disclosure is directed to a method for cleaning a component within a gas turbine engine, as defined in claim 1. The method includes positioning an acoustic emitter at a cleaning location of the component of the gas turbine engine. For example, the cleaning location may be characterized by having a build-up of foulants. Thus, the method also includes emitting, via the acoustic emitter, one or more acoustic waves at a predetermined frequency towards the cleaning location of the component so as to disperse the foulants. The method also comprises determining the predetermined frequency by measuring, via a sensor, an emissivity of the cleaning location, and correlating the emissivity with a frequency configured to disperse the foulants

In another aspect, the present disclosure is directed to a system for cleaning one or more components within a gas turbine engine, as defined in claim 9. The system includes an acoustic emitter for producing one or more acoustic waves for cleaning the one or more components of the gas turbine engine and a controller communicatively coupled with the acoustic emitter, the controller configured to control a frequency of the acoustic emitter. More specifically, the one or more components typically have a build-up of foulants accumulated on one or more surfaces thereof. Thus, the acoustic emitter is configured to direct the one or more acoustic waves at a predetermined frequency toward the build-up of foulants on the one or more components so as to disperse the foulants. The system further comprises at least one emissivity sensor communicatively coupled to the controller, the emissivity sensor configured to detect an emissivity of a surface of the one or more components, the emissivity being indicative of the presence of the foulants on the surface, the controller configured to correlate the emissivity with a frequency configured to disperse the foulants. It should also be understood that the system may include any of the additional features as described herein.

In yet another aspect, which is not part of the present invention, the present disclosure is directed to a hand-held acoustic emitter apparatus for cleaning one or more components of a gas turbine engine. The apparatus includes an acoustic emitter tube configured to direct one or more acoustic waves towards a cleaning location of the one or more components of the gas turbine engine. As mentioned, the cleaning location is typically characterized by having a build-up of foulants. Thus, the apparatus also includes an articulating guide located at a distal end of the acoustic emitter tube that is configured to locate the acoustic emitter tube near the cleaning location. Further, the apparatus includes a control unit configured to control the articulating guide. The apparatus also includes a handle configured to assist a user in locating the acoustic emitter tube. The control unit is configured to correlate an emissivity signal corresponding to an emissivity of a surface of the one or more components of the gas turbine engine with a frequency configured to disperse the foulants, the emissivity being indicative of the presence of the foulants on the surface. It should also be understood that the apparatus may include any of the additional features as described herein.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a schematic cross-sectional view of one embodiment of a gas turbine engine according to the present disclosure;
FIG. 2 illustrates a schematic diagram of one embodiment of a system configured for acoustic cleaning of one or more gas turbine engine components according to the present disclosure;
FIG. 3 illustrates a flow diagram of one embodiment of a method for acoustic cleaning one or more components of a gas turbine engine according to the present disclosure;
FIG. 4 illustrates a block diagram of one embodiment of suitable components that may be included in a gas turbine engine controller or control unit of an acoustic emitter according to the present disclosure;
FIG. 5 illustrates a partial, cross-sectional view of one embodiment of a compressor of a gas turbine engine, particularly illustrating an acoustic emitter tube of an acoustic emitter being inserted into a port of the compressor according to the present disclosure;
FIG. 6 illustrates a detailed view of a portion of FIG. 5, particularly illustrating an articulating guide at a distal end of the acoustic emitter tube emitting acoustic waves towards a cleaning location of a gas turbine engine component according to the present disclosure;
FIG. 7 illustrates a detailed view of a portion of FIG. 5, particularly illustrating an articulating guide at a distal end of the acoustic emitter tube emitting cleaning fluid towards a cleaning location of a gas turbine engine component according to the present disclosure; and
FIG. 8 illustrates a graph of one embodiment of frequency (x-axis) versus emissivity (y-axis) according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The positional terms "proximal" and "distal" are used herein to orient the various components of the acoustic emitter relative to each other and to the gas turbine engine.

"Distal" refers to the direction that is closest to the gas turbine engine, whereas "proximal" refers to the opposite direction.

Generally, the present disclosure is directed to systems and methods for cleaning gas turbine engine components using acoustic techniques. More specifically, in one embodiment, the method may include positioning an acoustic emitter near a cleaning location of a component of the gas turbine engine. For example, the cleaning location of the component may be characterized by having a build-up of foulants on a surface thereof. Thus, the method includes emitting, via the acoustic emitter, acoustic waves at a predetermined frequency towards the cleaning location of the component so as to disperse the foulants. As used herein, the term "foulants" generally encompasses any material or particles that can cause fouling or the adhesion of a foreign material or substance onto a surface so as to reduce its functionality. Example foulants may include but are not limited to dirt, dust, mud, particulates, or similar.

The present disclosure provides various advantages not present in the prior art. For example, gas turbine engines according to present disclosure can be cleaned on-wing, in-situ, and/or off-site. Further, the acoustic cleaning methods of the present disclosure provide simultaneous mechanical and chemical removal of particulate deposits in cooling passageways and/or on external surfaces of gas turbine engine components. In addition, the method of the present disclosure improves cleaning effectiveness and has significant implications for engine time on-wing durability.

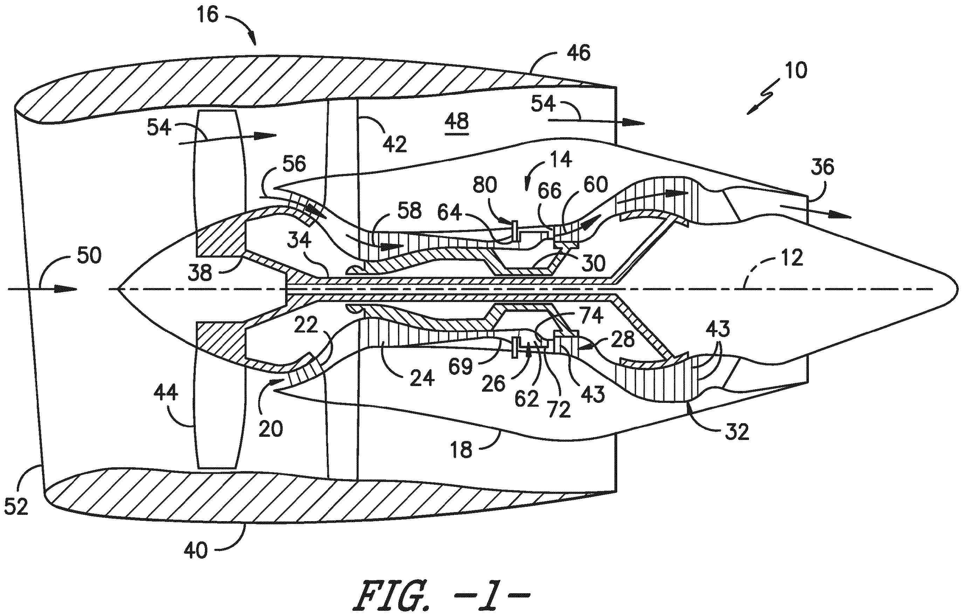

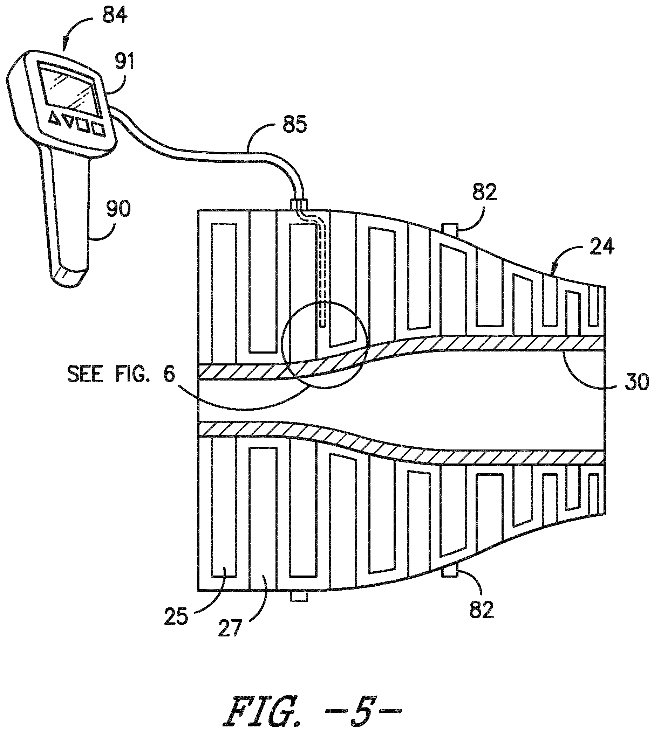

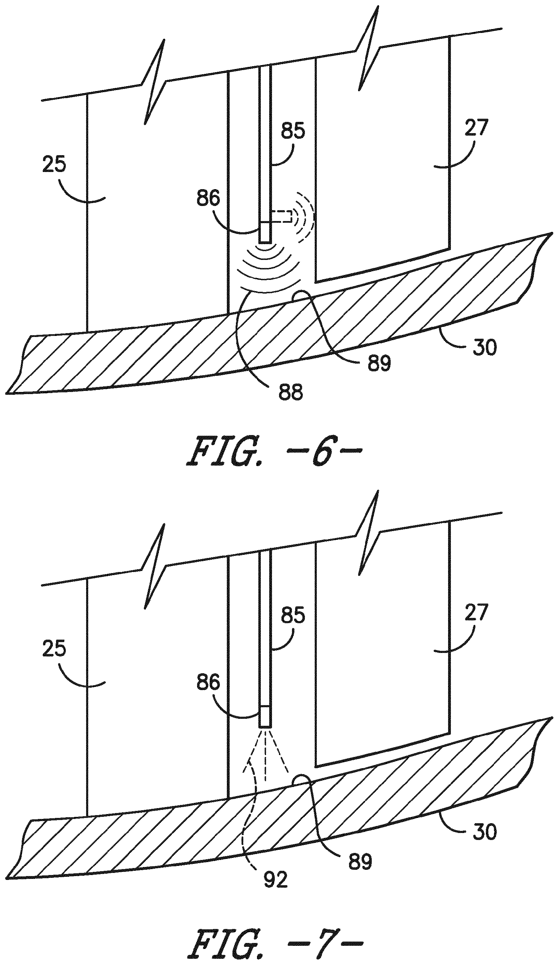

Referring now to the drawings, FIG. 1 illustrates a schematic cross-sectional view of one embodiment of a gas turbine engine 10 (high-bypass type) according to the present disclosure. More specifically, the gas turbine engine 10 may include an aircraft engine. As shown, the gas turbine engine 10 has an axial longitudinal centerline axis 12 therethrough for reference purposes. Further, as shown, the gas turbine engine 10 preferably includes a core gas turbine engine generally identified by numeral 14 and a fan section 16 positioned upstream thereof. The core engine 14 typically includes a generally tubular outer casing 18 that defines an annular inlet 20. The outer casing 18 further encloses and supports a booster 22 for raising the pressure of the air that enters core engine 14 to a first pressure level. A high pressure, multi-stage, axial-flow compressor 24 receives pressurized air from the booster 22 and further increases the pressure of the air. The compressor 24 includes rotating blades 25 and stationary vanes 27 (FIGS. 5 and 7) that have the function of directing and compressing air within the turbine engine 10. The pressurized air flows to a combustor 26, where fuel is injected into the pressurized air stream and ignited to raise the temperature and energy level of the pressurized air. The high energy combustion products flow from the combustor 26 to a first (high pressure) turbine 28 for driving the high pressure compressor 24 through a first (high pressure) drive shaft 30, and then to a second (low pressure) turbine 32 for driving the booster 22 and the fan section 16 through a second (low pressure) drive shaft 34 that is coaxial with the first drive shaft 30. After driving each of the turbines 28 and 32, the combustion products leave the core engine 14 through an exhaust nozzle 36 to provide at least a portion of the jet propulsive thrust of the engine 10.

The fan section 16 includes a rotatable, axial-flow fan rotor 38 that is surrounded by an annular fan casing 40. It will be appreciated that fan casing 40 is supported from the core engine 14 by a plurality of substantially radially-extending, circumferentially-spaced outlet guide vanes 42. In this way, the fan casing 40 encloses the fan rotor 38 and the fan rotor blades 44. The downstream section 46 of the fan casing 40 extends over an outer portion of the core engine 14 to define a secondary, or bypass, airflow conduit 48 that provides additional jet propulsive thrust.

From a flow standpoint, it will be appreciated that an initial airflow, represented by arrow 50, enters the gas turbine engine 10 through an inlet 52 to the fan casing 40. The airflow passes through the fan blades 44 and splits into a first air flow (represented by arrow 54) that moves through the conduit 48 and a second air flow (represented by arrow 56) which enters the booster 22.

The pressure of the second compressed airflow 56 is increased and enters the high pressure compressor 24, as represented by arrow 58. After mixing with fuel and being combusted in the combustor 26, the combustion products 60 exit the combustor 26 and flow through the first turbine 28. The combustion products 60 then flow through the second turbine 32 and exit the exhaust nozzle 36 to provide at least a portion of the thrust for the gas turbine engine 10.

Still referring to FIG. 1, the combustor 26 includes an annular combustion chamber 62 that is coaxial with the longitudinal centerline axis 12, as well as an inlet 64 and an outlet 66. As noted above, the combustor 26 receives an annular stream of pressurized air from a high pressure compressor discharge outlet 69. A portion of this compressor discharge air flows into a mixer (not shown). Fuel is injected from a fuel nozzle 80 to mix with the air and form a fuel-air mixture that is provided to the combustion chamber 62 for combustion. Ignition of the fuel-air mixture is accomplished by a suitable igniter, and the resulting combustion gases 60 flow in an axial direction toward and into an annular, first stage turbine nozzle 72. The nozzle 72 is defined by an annular flow channel that includes a plurality of radially-extending, circumferentially-spaced nozzle vanes 74 that turn the gases so that they flow angularly and impinge upon the first stage turbine blades of the first turbine 28. As shown in FIG. 1, the first turbine 28 preferably rotates the high-pressure compressor 24 via the first drive shaft 30, whereas the low-pressure turbine 32 preferably drives the booster 22 and the fan rotor 38 via the second drive shaft 34.

The combustion chamber 62 is housed within the engine outer casing 18 and fuel is supplied into the combustion chamber 62 by one or more fuel nozzles 80. More specifically, liquid fuel is transported through one or more passageways or conduits within a stem of the fuel nozzle 80.

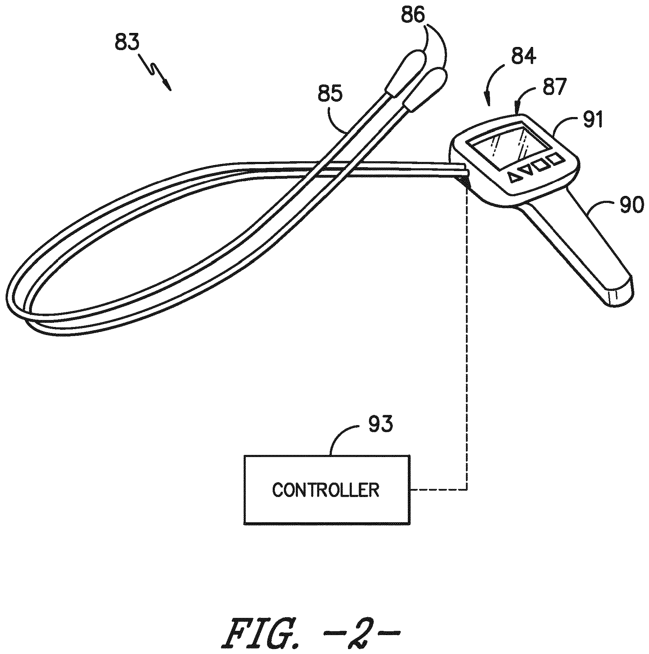

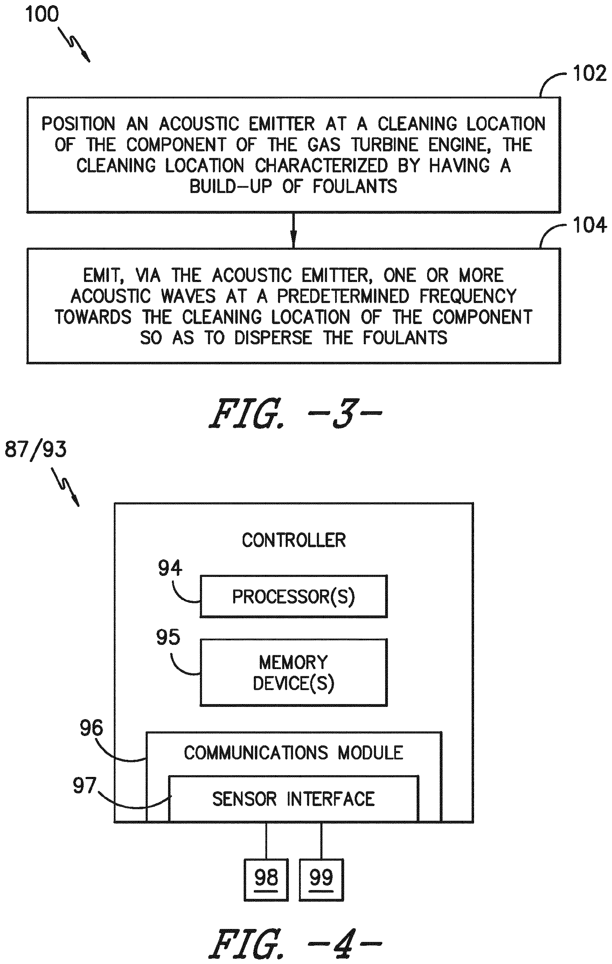

During operation of the gas turbine engine 10, foulants accumulate on the engine components. Such accumulation can lead to reduced cooling effectiveness of the components and/or corrosive reaction with the metals and/or coatings of the engine components, as well as fouling and deterioration of aircraft engine components. Thus, the present disclosure is directed to a system 83 (FIG. 2) and method 100 (FIG. 3) for acoustic cleaning of gas turbine engine components, e.g. such as the components illustrated and described in FIG. 1. For example, in certain embodiments, the component(s) of the gas turbine engine 10 may include any components of the engine 10 as described herein, including but not limited to the compressor 24, the high-pressure turbine 28, the low-pressure turbine 32, the combustor 26, the combustion chamber 62, one or more nozzles 72, 80, one or more turbine blades or vanes 43, one or more compressor blades 25 or vanes 27, flowpath walls, the booster 22, a turbine shroud, a casing 18 of the gas turbine engine 10, or similar. More specifically, the turbine components to be cleaned by the present system 83 (FIG. 2) typically have a build-up of foulants accumulated on one or more surfaces thereof, some of which may be difficult to access. Thus, the acoustic cleaning systems and methods of the present disclosure are particularly useful for cleaning aircraft engines installed on a wing of an aircraft.

Referring specifically to FIG. 2, a schematic diagram of one embodiment of the system 83 for cleaning one or more components of a gas turbine engine 10 according to the present disclosure is illustrated. As shown, the system 83 includes a hand-held acoustic emitter 84 for producing one or more acoustic waves 88 (FIG. 6) and a controller 93 communicatively coupled to the acoustic emitter 84. More specifically, in one embodiment, the acoustic emitter 84 may include a separate local control unit 87 communicatively coupled to a gas turbine controller 93. Alternatively, the control unit 87 may be integral with the engine controller 93. In additional embodiments, the acoustic emitter 84 may be directly controlled by the engine controller 93. Further, as shown, the acoustic emitter 84 includes an acoustic emitter tube 85 configured to direct the acoustic waves 88 towards a cleaning location 89 (FIGS. 6 and 7) of the component(s) of the gas turbine engine 10. For example, the acoustic emitter tube 85 may have a diameter and/or length that allow the tube 85 to be easily inserted into an inlet (e.g. inlet 20, 52 or 64) of the engine 10, one or more ports 82 of the engine 10 (FIG. 5), and/or one or more cooling passageways of the component(s) of the engine 10. More specifically, as shown in FIG. 5, the acoustic emitter tube 85 is illustrated as being inserted into a port of the engine 10.

In addition, the local control unit 87 is configured to control various features and/or operating modes of the emitter 84. For example, as shown in FIG. 2, the acoustic emitter 84 may have an articulating guide 86 located at a distal end of the acoustic emitter tube 85 so as to locate the tube 85 near the cleaning location 89 of the engine component. More specifically, the control unit 87 may be configured to control the articulating guide 86 such that the guide 86 can be selectively located in the vicinity of the target cleaning location 89. As such, the guide 86 is configured to direct acoustic waves 88 at a predetermined frequency toward the cleaning location(s) 89 for dispersing the foulants. In additional embodiments, the acoustic emitter 84 may include multiple articulating guides 86, e.g. as shown in FIG. 2.

In certain embodiments, the control unit 87 may also include a user interface 91 and an optional key pad that provides a display of the cleaning location(s) 89 to a user. Thus, the user can view the tube 85 as it emits waves 88 at the cleaning site. As such, the user can use the key pad to adjust the articulating guide 86 (as indicated by the dotted lines of FIG. 6) to change or adjust the cleaning location 89 as necessary. In additional embodiments, the acoustic emitter 84 may also include a handle configured to assist a user in locating the acoustic emitter tube 85 near the engine component.

Referring specifically to FIG. 4, there is illustrated a block diagram of one embodiment of suitable components that may be included in the controller 93 and/or the control unit 87 according to the present disclosure. As shown, the controller 93 may include one or more processor(s) 94 and associated memory device(s) 95 configured to perform a variety of computer-implemented functions (e.g., performing the methods, steps, calculations and the like and storing relevant data as disclosed herein). Additionally, the controller 93 may also include a communications module 96 to facilitate communications between the controller 93 and the various components of the gas turbine engine 10 or control unit 87. Further, the communications module 96 may include a sensor interface 97 (e.g., one or more analog-to-digital converters) to permit signals transmitted from one or more sensors 98, 99 to be converted into signals that can be understood and processed by the processors 94. It should be appreciated that the sensors 98, 99 may be communicatively coupled to the communications module 96 using any suitable means. For example, as shown in FIG. 4, the sensors 98, 99 are coupled to the sensor interface 97 via a wired connection. However, in other embodiments, the sensors 98, 99 may be coupled to the sensor interface 97 via a wireless connection, such as by using any suitable wireless communications protocol known in the art. As such, the processor 94 may be configured to receive one or more signals from the sensors 98, 99.

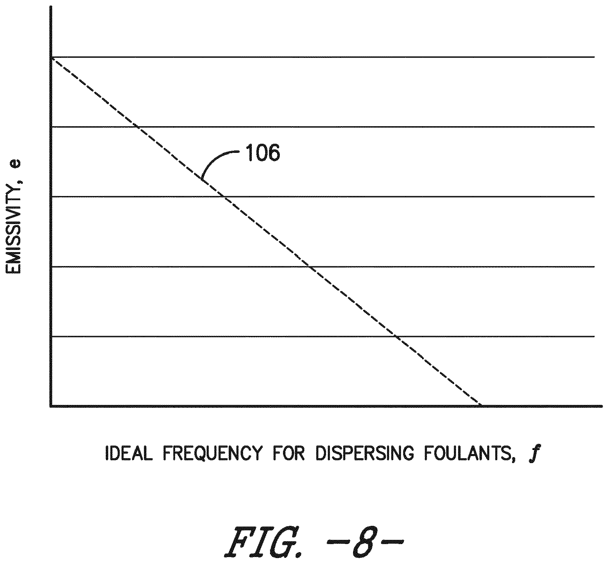

It should be understood that the sensors 98, 99 include suitable sensors. The system 83 includes at least one emissivity sensor communicatively coupled to the controller 93 and/or the control unit 87. More specifically, the emissivity sensor (e.g. sensors 98, 99) is configured to detect an emissivity of a surface of the one or more components. Thus, the measured emissivity is configured to give an indication of the amount of foulants on the surface thereof. As such, the control unit 87 (or the controller 93) is configured to correlate the emissivity with a frequency configured to disperse the foulants, which will be discussed in more detail with reference to FIG. 8.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 95 may generally comprise memory element(s) including, but not limited to, computer readable medium (e.g., random access memory (RAM)), computer readable non-volatile medium (e.g., a flash memory), cloud storage, a floppy disk, a compact disc-read only memory (CD-ROM), a magneto-optical disk (MOD), a digital versatile disc (DVD) and/or other suitable memory elements. Such memory device(s) 95 may generally be configured to store suitable computer-readable instructions that, when implemented by the processor(s) 94, configure the controller 93 (or control unit 87) to perform various functions including to control the engine and/or the acoustic emitter 84.

Referring now to FIG. 3, a flow diagram of one embodiment of a method 100 for on-wing cleaning one or more components of a gas turbine engine (e.g. such as the gas turbine engine 10 illustrated in FIG. 1) is illustrated. As shown at 102, the method 100 includes positioning the acoustic emitter 84 (FIG. 3) near a cleaning location 89 (FIGS. 5-7) or surface of the component of the gas turbine engine 10. The cleaning location 89 may be any suitable surface, passageway, or similar of any gas turbine component and is typically characterized by having a build-up of foulants or particulates configured thereon. For example, as shown in FIGS. 5-7, the component includes the compressor 24 and the cleaning location 89 corresponds to an area between a rotating compressor blade 25 and a stationary vane 27. Thus, as shown, the step of positioning the acoustic emitter 84 at a cleaning location 89 of the component of the engine 10 may include inserting an acoustic emitter tube 85 of the acoustic emitter 84 into an inlet (e.g. inlet 20, 52 or 64) of the engine 10, one or more ports 82 of the engine 10, and/or one or more cooling passageways of the component(s) of the engine 10. Thus, the method 100 is particularly useful for cleaning internal engine components having difficult access.

Further, as shown in FIG. 3, the method 100 also includes emitting 104, via the acoustic emitter 84, one or more acoustic waves 88 at a predetermined frequency towards the cleaning location 89 of the component so as to disperse the foulants. In certain embodiments, the predetermined frequency may range from about 2 hertz (Hz) to about 1500 Hz, more preferably from about 2 Hz to about 800 Hz. More specifically, in certain embodiments, the step of emitting one or more acoustic waves 88 at the predetermined frequency towards the cleaning location 89 of the component may include providing airflow within the gas turbine engine 10 during emission so as to move the acoustic waves 88 towards the cleaning location 89 of the component. More specifically, the method 100 may include motoring or running the engine 10 during emission of the waves 88 so as to provide airflow that moves the acoustic waves 88 through the component of the gas turbine engine 10. Alternatively or in addition, the step of emitting one or more acoustic waves at the predetermined frequency towards the cleaning location 89 of the component may include utilizing one or more external pressure sources to provide airflow that moves the acoustic waves 88 through the component of the gas turbine engine 10. For example, in certain embodiments, the external pressure sources may include a fan, a blower, or similar.

After the acoustic waves 88 are given adequate time to disperse the foulants, the method 100 may also include rinsing the cleaning location 89. For example, as shown in FIG. 7, the acoustic emitter tube 85 may be configured to deliver cleaning fluids 92 to the cleaning location 89. Thus, the cleaning fluids are configured to rinse the dispersed foulants from the surface of the component.

Referring now to FIG. 8, the method 100 also includes determining the predetermined frequency by measuring, via a sensor (e.g. sensors 98, 99), emissivity of the cleaning location 89 and correlating the emissivity with a frequency configured to disperse the foulants. For example, as shown in Table 1 and the graph of FIG. 8, emissivity can be correlated to an ideal frequency for dispersing the foulants. More specifically, as shown in Table 1, metals (e.g. aluminum, copper, silver, etc.) typically have a lower emissivity, whereas stones (e.g. asphalt, brick, limestone, marble, plaster, etc.), which is similar in composition to foulants, have a higher emissivity. Thus, the presence of foulants results in sensor measurements having a higher emissivity value that can be correlating to an appropriate frequency value for the emitter 84.

| **Material** | **Emissivity** |
|---|---|
| Aluminum | 0.03 |
| Copper | 0.04 |
| Silver | 0.02 |
| Asphalt | 0.88 |
| Brick | 0.90 |
| Limestone | 0.92 |
| Marble | 0.90 |
| Plaster | 0.89 |
| Paint | 0.90 |

Accordingly, as emissivity is the inverse of reflectivity (e.g. as represented by line 106), a higher emissivity value is indicative of a higher amount of foulant being present on the engine component. Thus, low frequency acoustic waves may be provided to the component for dispersing the foulants. Similarly, a lower emissivity value is indicative of a low amount of foulant being present on the engine component, which can be treated with high frequency acoustic waves.

This written description uses examples to disclose the invention, including the preferred mode, and also to enable any person skilled in the art to practice the invention, including making and using any devices or systems and performing any incorporated methods. The patentable scope of the invention is defined by the claims.

## Claims

1. A method for cleaning a component within a gas turbine engine (10), the method comprising:
positioning an acoustic emitter (84) at a cleaning location (89) of the component of the gas turbine engine (10), the cleaning location (89) **characterized by** having a build-up of foulants; and
emitting, via the acoustic emitter (84), one or more acoustic waves (88) at a predetermined frequency towards the cleaning location (89) of the component so as to disperse the foulants;
**characterized in that** the method further comprises determining the predetermined frequency by measuring, via a sensor (98, 99), an emissivity of the cleaning location (89), and correlating the emissivity with a frequency configured to disperse the foulants.

2. The method of claim 1, further comprising inserting the acoustic emitter (84) into at least one of an inlet (20, 52, 64), a port (82), or a cooling passageway of the component of the gas turbine engine (10).

3. The method of either of claim 1 or 2, further comprising rinsing the cleaning location (89), via the acoustic emitter (84), after emitting the acoustic waves (88).

4. The method of any preceding claim, wherein emitting one or more acoustic waves (88) at the predetermined frequency towards the cleaning location (89) of the component further comprises providing airflow within the gas turbine engine (10) during emission so as to move the acoustic waves (88) towards the cleaning location (89) of the component.

5. The method of any preceding claim, wherein the predetermined frequency ranges from about 2 hertz (Hz) to about 1500 Hz.

6. The method of any preceding claim, wherein the gas turbine engine (10) comprises an aircraft engine of an aircraft.

7. The method of claim 6, wherein the aircraft engine is installed on a wing of the aircraft.

8. The method of any preceding claim, wherein the one or more components of the gas turbine engine (10) comprise at least one of a compressor (24), a high-pressure turbine (28), a low-pressure turbine (32), a combustor (26), a combustion chamber (62), a fuel nozzle (80), one or more turbine blades, one or more compressor blades (25), a combustor liner, flowpath walls, a turbine nozzle or vane, a compressor vane, a booster (22), a turbine shroud, or a casing of the gas turbine engine (10).

9. A system (83) for cleaning one or more components within a gas turbine engine (10), the system (83) comprising:
an acoustic emitter (84) for producing one or more acoustic waves (88) for cleaning the one or more components of the gas turbine engine (10), the one or more components having a build-up of foulants accumulated on a surface thereof; and
a controller (87, 93) communicatively coupled with the acoustic emitter (84), the controller (87, 93) configured to control a frequency of the acoustic emitter (84),
wherein the acoustic emitter (84) is configured to direct the one or more acoustic waves (88) at a predetermined frequency toward the build-up of foulants on the one or more components so as to disperse the foulants;
**characterized in that** the system further comprises at least one emissivity sensor (98, 99) communicatively coupled to the controller (87, 93), the emissivity sensor (98, 99) configured to detect an emissivity of a surface of the one or more components, the emissivity being indicative of the presence of the foulants on the surface, the controller (87, 93) configured to correlate the emissivity with a frequency configured to disperse the foulants.

10. The system (83) of claim 9, wherein the acoustic emitter (84) is configured to fit into at least one of an inlet (20, 52, 64), a port (82), or a cooling passageway of the component of the gas turbine engine (10).

## Patentansprüche

1. Verfahren zum Reinigen einer Komponente innerhalb eines Gasturbinentriebwerks (10), das Verfahren umfassend:
Positionieren eines akustischen Emitters (84) an einer Reinigungsstelle (89) der Komponente des Gasturbinentriebwerks (10), wobei die Reinigungsstelle (89) **gekennzeichnet ist durch** Aufweisen einer Ausbildung von Verschmutzungen; und
Emittieren, über den akustischen Emitter (84), einer oder mehrerer akustischer Wellen (88) mit einer vorbestimmten Frequenz zu der Reinigungsstelle (89) der Komponente hin, um die Verschmutzungen zu dispergieren;
**dadurch gekennzeichnet, dass** das Verfahren ferner das Bestimmen der vorbestimmten Frequenz durch Messen, über einen Sensor (98, 99), eines Emissionsgrads der Reinigungsstelle (89) und Korrelieren des Emissionsgrads mit einer Frequenz, die konfiguriert ist, um die Verschmutzungen zu dispergieren, umfasst.

2. Verfahren nach Anspruch 1, ferner umfassend das Einführen des akustischen Emitters (84) in mindestens eines von einem Einlass (20, 52, 64), einem Anschluss (82) oder einem Kühlkanal der Komponente des Gasturbinentriebwerks (10).

3. Verfahren nach Anspruch 1 oder 2, ferner umfassend das Spülen der Reinigungsstelle (89) über den akustischen Emitter (84) nach dem Emittieren der akustischen Wellen (88).

4. Verfahren nach einem der vorstehenden Ansprüche, wobei das Emittieren einer oder mehrerer akustischer Wellen (88) mit der vorbestimmten Frequenz zu der Reinigungsstelle (89) der Komponente hin ferner das Bereitstellen eines Luftstroms innerhalb des Gasturbinentriebwerks (10) während der Emission umfasst, um die akustischen Wellen (88) zu der Reinigungsstelle (89) der Komponente hin zu bewegen.

5. Verfahren nach einem der vorstehenden Ansprüche, wobei die vorbestimmte Frequenz in dem Bereich von etwa 2 Hertz (Hz) bis etwa 1500 Hz liegt.

6. Verfahren nach einem der vorstehenden Ansprüche, wobei das Gasturbinentriebwerk (10) ein Luftfahrzeugtriebwerk umfasst.

7. Verfahren nach Anspruch 6, wobei das Luftfahrzeugtriebwerk an einem Flügel des Luftfahrzeugs installiert ist.

8. Verfahren nach einem der vorstehenden Ansprüche, wobei die eine oder die mehreren Komponenten des Gasturbinentriebwerks (10) mindestens eines von einem Verdichter (24), einer Hochdruckturbine (28), einer Niederdruckturbine (32), einer Verbrennungsanlage (26), einer Brennkammer (62), einer Kraftstoffdüse (80), einer oder mehrerer Turbinenschaufeln, einer oder mehrerer Verdichterschaufeln (25), einer Verbrennungsanlagenauskleidung, Strömungspfadwände, einer Turbinendüse oder -schaufel, einer Verdichterschaufel, einem Booster (22), einer Turbinenwirbelwand oder ein Gehäuse des Gasturbinentriebwerks (10) umfassen.

9. System (83) zum Reinigen einer oder mehrerer Komponenten innerhalb eines Gasturbinentriebwerks (10), das System (83) umfassend:
einen akustischen Emitter (84) zum Herstellen einer oder mehrerer akustischer Wellen (88) zum Reinigen der einen oder der mehreren Komponenten des Gasturbinentriebwerks (10), wobei die eine oder die mehreren Komponenten einen Ausbildung von Verschmutzungen aufweisen, die auf einer Oberfläche davon akkumuliert sind; und
eine Steuerung (87, 93), die mit dem akustischen Emitter (84) kommunikativ gekoppelt ist, wobei die Steuerung (87, 93) konfiguriert ist, um eine Frequenz des akustischen Emitters (84) zu steuern,
wobei der akustische Emitter (84) konfiguriert ist, um die eine oder die mehreren akustischen Wellen (88) mit einer vorbestimmten Frequenz zu der Ausbildung von Verschmutzungen auf der einen oder den mehreren Komponenten zu leiten, um die Verschmutzungen zu dispergieren;
**dadurch gekennzeichnet, dass** das System ferner mindestens einen Emissionsgradsensor (98, 99) umfasst, der mit der Steuerung (87, 93) kommunikativ gekoppelt ist, wobei der Emissionsgradsensor (98, 99) konfiguriert ist, um einen Emissionsgrad einer Oberfläche der einen oder mehreren Komponenten zu erfassen, wobei der Emissionsgrad das Vorhandensein der Verschmutzungen auf der Oberfläche angibt, wobei die Steuerung (87, 93) konfiguriert ist, um den Emissionsgrad mit einer Frequenz zu korrelieren, die konfiguriert ist, um die Verschmutzungen zu dispergieren.

10. System (83) nach Anspruch 9, wobei der akustische Emitter (84) konfiguriert ist, um in mindestens eines von einem Einlass (20, 52, 64), einem Anschluss (82) oder einem Kühlkanal der Komponente des Gasturbinentriebwerks (10) zu passen.

## Revendications

1. Procédé pour le nettoyage d'un composant à l'intérieur d'une turbine à gaz (10), le procédé comprenant :
le positionnement d'un émetteur acoustique (84) au niveau d'un emplacement de nettoyage (89) du composant de la turbine à gaz (10), l'emplacement de nettoyage (89) étant **caractérisé par** le fait d'avoir une accumulation de salissures ; et
l'émission, par l'intermédiaire de l'émetteur acoustique (84), d'une ou plusieurs ondes acoustiques (88) à une fréquence prédéterminée vers l'emplacement de nettoyage (89) du composant de façon à disperser les salissures ;
**caractérisé en ce que** le procédé comprend en outre la détermination de la fréquence prédéterminée en mesurant, par l'intermédiaire d'un capteur (98, 99), une émissivité de l'emplacement de nettoyage (89), et en corrélant l'émissivité avec une fréquence configurée pour disperser les salissures.

2. Procédé selon la revendication 1, comprenant en outre l'insertion de l'émetteur acoustique (84) dans au moins l'un parmi une entrée (20, 52, 64), un orifice (82), ou un passage de refroidissement du composant de la turbine à gaz (10).

3. Procédé selon la revendication 1 ou 2, comprenant en outre le rinçage de l'emplacement de nettoyage (89), par l'intermédiaire de l'émetteur acoustique (84), après émission des ondes acoustiques (88).

4. Procédé selon l'une quelconque revendication précédente, dans lequel l'émission d'une ou plusieurs ondes acoustiques (88) à la fréquence prédéterminée vers l'emplacement de nettoyage (89) du composant comprend en outre la fourniture d'un flux d'air à l'intérieur de la turbine à gaz (10) pendant l'émission de façon à déplacer les ondes acoustiques (88) vers l'emplacement de nettoyage (89) du composant.

5. Procédé selon l'une quelconque revendication précédente, dans lequel la fréquence prédéterminée est comprise entre environ 2 hertz (Hz) et environ 1500 Hz.

6. Procédé selon l'une quelconque revendication précédente, dans lequel la turbine à gaz (10) comprend un moteur d'aéronef d'un aéronef.

7. Procédé selon la revendication 6, dans lequel le moteur d'aéronef est installé sur une aile de l'aéronef.

8. Procédé selon l'une quelconque revendication précédente, dans lequel le ou les composants de la turbine à gaz (10) comprend au moins l'un parmi un compresseur (24), une turbine haute pression (28), une turbine basse pression (32), un dispositif combustor (26), une chambre de combustion (62), un injecteur de carburant (80), une ou plusieurs aubes de turbine, une ou plusieurs pales de compresseur (25), une chemise de combustion, des parois de voie d'écoulement, une tuyère ou ailette de turbine, une ailette de compresseur, un surpresseur (22), une enveloppe de turbine, ou un carter de turbine à gaz (10).

9. Système (83) pour le nettoyage d'un ou plusieurs composants à l'intérieur d'une turbine à gaz (10), le système (83) comprenant :
un émetteur acoustique (84) pour produire une ou plusieurs ondes acoustiques (88) pour nettoyer le ou les composants de la turbine à gaz (10), le ou les composants ayant une accumulation de salissures accumulées sur une surface de ceux-ci ; et
un dispositif de commande (87, 93) couplé de manière communicative à l'émetteur acoustique (84), le dispositif de commande (87, 93) étant configuré pour commander une fréquence de l'émetteur acoustique (84),
dans lequel l'émetteur acoustique (84) est configuré pour diriger la ou les ondes acoustiques (88) à une fréquence prédéterminée vers l'accumulation de salissures sur le ou les composants de façon à disperser les salissures ;
**caractérisé en ce que** le système comprend en outre au moins un capteur d'émissivité (98, 99) couplé de manière communicative au dispositif de commande (87, 93), le capteur d'émissivité (98, 99) étant configuré pour détecter une émissivité d'une surface du ou des composants, l'émissivité indiquant la présence des salissures sur la surface, le dispositif de commande (87, 93) étant configuré pour corréler l'émissivité avec une fréquence configurée pour disperser les salissures.

10. Système (83) selon la revendication 9, dans lequel l'émetteur acoustique (84) est configuré pour s'ajuster dans au moins l'un parmi d'une entrée (20, 52, 64), un orifice (82), ou un passage de refroidissement du composant de la turbine à gaz (10).
